# DEMANDE DE BREVET EUROPEEN

(11) **EP 4 834 863 A1**
(43) Date de publication de la demande: **04.11.2026**
(21) Numéro de dépôt: 26175506.0
(22) Date de dépôt: 29.04.2026
(51) Int. Cl.: C04B 28/14, B01F 23/232, B01F 25/40, B01F 25/314, B28B 17/02, B28C 5/00, B28C 5/08, B28C 5/46, B28C 9/00, C04B 20/02, C04B 111/00

(54) **PROCÉDÉ DE FABRICATION D'UNE COMPOSITION DE PLÂTRE**

(30) Priorité: 29.04.2025 BE 202505283
(71) Demandeur: B. en N. Knauf en Co, 8710 Wielsbeke (BE)
(72) Inventeur: DE VOCHT, Gwijde, 8710 Wielsbeke (BE); ROCCA, Jonathan, 8710 Wielsbeke (BE)
(74) Mandataire: Calysta NV

(57) **Abrégé**

Procédé de fabrication d'une composition de plâtre en continu comprenant :
- Un approvisionnement d'eau dans un conduit,
- Une injection de CO₂ gazeux dans ledit conduit approvisionné en eau et qui s'étend du point d'injection de CO₂ gazeux jusqu'à l'entrée d'une unité de mélange
- Dispersion et dissolution du CO₂ gazeux dans l'eau
- Après dispersion et dissolution du CO₂ gazeux dans l'eau, addition de l'eau contenant le CO₂ gazeux dans ladite unité de mélange
- Addition d'une composition solide comprenant du sulfate de calcium hémihydraté dans ladite unité de mélange,
- Mélange de l'eau contenant le CO₂ gazeux avec ladite composition solide dans ladite unité de mélange et formation d'une composition liquide de plâtre,
caractérisé en ce que, l'eau contenant le CO₂ gazeux est alimentée dans ledit conduit à un débit d'au moins 200 L/min et en ce que la dissolution du CO₂ gazeux dans l'eau est réalisée par un mélange passif dans ledit conduit.

## Description

La présente invention se rapporte à un procédé de fabrication d'une composition de plâtre en continu pour fabriquer des plaques de plâtres, à son installation et à une utilisation.

Dans la fabrication de plaques de plâtre, on mélange traditionnellement de l'eau et du «stucco» (du sulfate de calcium hémihydraté, noté β-CaSO₄·½H₂O) pour obtenir une pâte (slurry).

Pour assurer une bonne fluidité et une bonne mise en forme, il faut généralement plus d'eau que la quantité strictement nécessaire à la réhydratation du stucco. Ainsi, l'application de la pâte entre deux plaques de carton permet de préparer des plaques de plâtres pour le domaine de la construction. L'excès d'eau utilisé pour la réhydratation susvisée doit ensuite être évaporé lors du séchage des plaques de plâtres, ce qui entraîne des coûts énergétiques élevés. Après séchage, les plaques de plâtres sont découpées conformément à la pratique dans le domaine.

Le document WO 2020 104 002 propose d'introduire du CO₂ dans l'eau de procédé afin de réduire la demande en eau tout en conservant la fluidité nécessaire de la pâte. Cette diminution de l'eau permet de réduire la consommation d'énergie au séchage et de potentiellement baisser la quantité d'agent moussant. Le CO₂ peut être dissous ou dispersé dans l'eau, par exemple au moyen d'un *sparger* (diffuseur) ou sous pression. Les concentrations typiques de CO₂ gazeux dispersé / dissous dans l'eau de procédé varient d'environ 1 g/L à 8 g/L, avec un maximum recommandé à 15 g/L.

Ce procédé connu permet une diminution du besoin en agent moussant pour atteindre une densité donnée.

Malheureusement, une concentration trop élevée de CO₂ (par exemple au-delà de 8 g/L) peut retarder la prise (le durcissement) de l'hémihydrate. Et, l'eau qui peut être acidifiée par le CO₂ (pH ≤ 8) doit être introduite à une distance suffisante du mélangeur avec des paramètres prédéfinis en termes de débit d'injection, température de l'eau et conception du sparger pour éviter une perte prématurée du CO₂.

Ainsi, il est possible d'observer un dégagement de CO₂ gazeux non dissous s'échappant de l'eau et pouvant atteindre l'opérateur de la ligne de production. Ce phénomène, en plus d'impliquer des couts économiques, est surtout délétère pour la santé des techniciens qui se trouvent à proximité des zones de dégagement de CO₂ gazeux. En effet, une exposition élevée au CO₂ gazeux peut provoquer des symptômes d'atteintes cognitifs comme la fatigue, mal de tête et état de confusion. Or, il est indispensable de respecter les normes applicables en termes d'exposition maximale par heure pour un opérateur sur site.

Or, il existe un besoin de pouvoir fournir une solution flexible à l'utilisateur pouvant intégrer un procédé rentable économiquement, en particulier grâce à une optimisation énergétique et qui ne présente aucun risque d'exposition inadaptée pour les opérateurs, tout en permettant la formation d'une composition de plâtre prête à l'emploi dans un processus qui fonctionne en continu, en particulier pour la fabrication de plaques de plâtre.

Pour résoudre ce problème, la présente invention propose un procédé de fabrication d'une composition de plâtre en continu pour fabriquer des plaques de plâtres comprenant :
- Un approvisionnement d'eau (1) dans un conduit (2),
- Une injection de CO₂ gazeux (3) dans ledit conduit (2) approvisionné en eau, ledit conduit s'étendant au moins du point d'injection de CO₂ gazeux (3) jusqu'à l'entrée d'une unité de mélange (4)
- Dispersion et dissolution du CO₂ gazeux dans l'eau s'écoulant dans ledit conduit (2),
- Après dispersion et dissolution du CO₂ gazeux dans l'eau, addition de l'eau contenant le CO₂ gazeux dans ladite unité de mélange (4)
- Addition d'une composition solide (5) comprenant du sulfate de calcium hémihydraté dans ladite unité de mélange (4),
- Mélange de l'eau contenant le CO₂ gazeux avec ladite composition solide (5) dans ladite unité de mélange (4) et formation d'une composition liquide de plâtre (7),
caractérisé en ce que, l'eau contenant le CO₂ gazeux est alimentée dans ledit conduit (2) à un débit d'au moins 200 L/min, de préférence comprise entre 250 et 400 L/min, plus préférentiellement comprise entre 275 et 350 L/min, plus préférentiellement encore entre 275 et 320 L/min, et en ce que la dissolution du CO₂ gazeux dans l'eau est réalisée par un mélange passif dans ledit conduit (2).

La présente invention permet l'utilisation de CO₂ dans une ligne, tout en réduisant les pertes de CO₂ et l'exposition à l'opérateur.

Il a été surprenant de constater que la mise en oeuvre d'un mélange passif au sein du (lire, dans le) conduit permet d'assurer de manière pérenne une dissolution efficace, voire une dissolution totale, du CO₂ gazeux dans l'eau. Ainsi, l'eau contenant le CO₂ gazeux dispersé et dissous peut aisément atteindre l'unité de mélange, en limitant fortement le dégagement de CO₂ gazeux.

En outre, la consommation d'eau diminue sur l'ensemble de l'installation ce qui permet d'optimiser l'énergie ultérieure pour l'étape de séchage des plaques de plâtre par exemple qui est plus économe. En sus de cet avantage, la consommation de CO₂ gazeux sur la totalité du procédé est également revue à la baisse, ce qui n'était pas attendu. En effet, il apparait que peu, voire pas du tout, de CO₂ gazeux n'est dégagé de l'unité de mélange. Cela signifie que l'injection d'une quantité de CO₂ gazeux dans le conduit correspond sensiblement à la quantité de CO₂ gazeux dispersée et dissoute dans l'eau.

Ainsi, il a été constaté que la combinaison d'un débit d'eau d'au moins 200 L/min avec un mélange passif au sein du conduit permet de générer un régime d'écoulement favorisant la dispersion et la dissolution efficace du CO₂ gazeux. En particulier, le débit élevé coopère avec les éléments de mélange passif, tels qu'un mélangeur statique et/ou Venturi, pour intensifier les phénomènes de cisaillement et de transfert de matière gaz-liquide.

Ainsi, contrairement à une simple juxtaposition de caractéristiques, le débit et le mélange passif interagissent pour permettre une dissolution du CO₂, notamment dans des installations compactes, tout en limitant le dégagement de CO₂ gazeux en sortie du conduit.

L'utilisation combinée d'un débit d'au moins 200 L/min et d'un mélange passif permet d'obtenir une dissolution efficace du CO₂ dans des conduits de longueur réduite, ce qui n'était pas attendu.

De manière préférée, l'eau contenant le CO₂ gazeux s'écoule dans le conduit à un débit d'au moins 200 L/min, lequel débit étant adapté pour coopérer avec ledit mélange passif afin de favoriser la dispersion et la dissolution du CO₂ dans l'eau.

L'avantage du présent procédé permet de s'affranchir de conditions opératoires strictes en termes de paramétrages (température, débit, quantité, durée...).

L'invention permet aussi d'utiliser le procédé pour des installations compactes, pour lesquelles le CO₂ gazeux se dissous difficilement sur une distance donnée. La taille compacte peut nécessiter une dissolution plus rapide.

Ainsi, le procédé suivant l'invention est agile en ce qu'il peut être aisément intégré à un procédé existant et pour des sites industriels de grande, moyenne et petite taille.

De manière préférentielle, le procédé suivant l'invention est adaptée pour des installations compactes.

De manière préférée, l'approvisionnement d'eau est réalisé au moyen d'une pompe connue de la personne du métier.

Avantageusement, au moyen d'une pompe connue de la personne du métier, l'eau contenant le CO₂ gazeux est alimentée dans ledit conduit à un débit d'au moins 200 L/min, de préférence comprise entre 250 et 400 L/min, plus préférentiellement comprise entre 275 et 350 L/min, plus préférentiellement encore entre 275 et 320 L/min.

De manière encore plus préférée, le débit d'écoulement de l'eau contenant le CO₂ dans le conduit est associé à une réduction de section dudit conduit. À cet effet, le conduit comprend une première section présentant un premier diamètre intérieur, suivie d'une deuxième section présentant un diamètre intérieur inférieur à celui de ladite première section.

De préférence, ledit conduit qui s'étend du point d'injection du CO₂ gazeux jusqu'à l'entrée de ladite unité de mélange correspond à une distance inférieure à 40 mètres, de préférence inférieure à 35 mètres, plus préférentiellement inférieure à 30 mètres, encore plus préférentiellement inférieure à 25 m, avantageusement inférieure à 20 m, plus avantageusement inférieure à 15 m, encore plus avantageusement inférieure à 10 m.

En effet, il a été constaté que, pour une installation compacte destinée à la fabrication de plaque de plâtre, la distance sur laquelle s'étend ledit conduit est telle que la dissolution de CO₂ gazeux n'était pas suffisante, conduisant à un dégagement et une perte de CO₂ gazeux avant mélange avec le sulfate de calcium hémi-hydraté. Il est apparu que pour une distance inférieure à 40 mètres, de préférence inférieur à 35 mètres, plus préférentiellement inférieur à 30 mètres, encore plus préférentiellement inférieure à 25 m, avantageusement inférieure à 20 m, plus avantageusement inférieure à 15 m, encore plus avantageusement inférieure à 10 m, la présente invention permet d'assurer une dissolution continue et complète du CO₂ gazeux dans l'eau.

De manière préférée, la dispersion de CO₂ gazeux dans l'eau peut être réalisée à l'aide d'un dispositif de dispersion adapté, tel un *sparger.*

Plus préférentiellement, le mélange passif est réalisé par effet Venturi au sein dudit conduit et/ou au moyen d'un mélangeur statique choisi dans le groupe comprenant au moins une ailette, une contre-pale, une structure hélicoïdale. Cela permet d'assurer un mélange forcé de qualité avec une moindre modification dudit conduit.

De manière avantageuse, l'eau approvisionnée est issue d'un procédé de récupération d'eau, de préférence de l'eau provenant d'une source naturelle, de l'eau de pluie, de l'eau recyclée provenant d'une usine voisine, de l'eau de ville et leurs mélanges. Cette approche d'approvisionnement permet de limiter le recours à l'eau de ville et de réduire l'empreinte écologique en favorisant le recyclage et la réutilisation des eaux industrielles /usées.

Plus avantageusement, le procédé selon l'invention comprend un ajout d'additifs organiques et/ou inorganiques sous forme de liquide dans ledit conduit simultanément ou après l'injection de CO₂ gazeux.

Encore plus avantageusement, le procédé selon l'invention comprend un ajout d'additifs organiques et/ou inorganiques sous forme de poudre dans ladite unité de mélange simultanément ou après addition de ladite composition solide comprenant du sulfate de calcium hémihydraté.

De préférence, les additifs organiques et/ou inorganiques sous forme de liquide sont sélectionnés parmi le groupe comprenant les silicones, les résines hydrophobes, les poly(acétate de vinyle), les alcools polyvinyliques, les polymères d'acrylates, les polymères uréthanes et leurs mélanges.

Plus préférentiellement, les additifs organiques et/ou inorganiques sous forme de poudre sont sélectionnés parmi le groupe comprenant les fibres de verre, la perlite, la vermiculite, les cires, la paraffine, la cellulose, le verre et leurs mélanges.

Il a été constaté que l'addition d'additifs organiques et/ou inorganiques permettait d'améliorer les caractéristiques fonctionnelles d'une composition de plâtre. En effet, l'intégration d'un ou plusieurs additifs permet une meilleure mise en œuvre, des propriétés mécaniques renforcées et une meilleure durabilité face aux variations hygrométriques et climatiques.

Avantageusement, le procédé selon l'invention comprend une addition d'un agent moussant dans ladite unité de mélange simultanément ou après addition de la composition solide ou dans ledit conduit. L'addition d'un agent moussant présente l'avantage de réduire la densité du plâtre et d'améliorer l'isolation thermique et acoustique du plâtre ainsi produit.

Selon un mode avantageux, le procédé selon l'invention dans lequel ledit conduit présente une section avec un diamètre inférieur à celui de ladite unité de mélange.

Selon un mode préféré, ledit conduit est choisi dans le groupe comprenant un tube, un tuyau, une canalisation.

Selon un mode avantageux, la composition de plâtre en sortie de ladite unité de mélange présente un dégagement CO₂ gazeux inférieur à 5000 ppm, de préférence inférieur à 4000 ppm, plus préférentiellement inférieur à 3000 ppm, encore plus préférentiellement inférieur à 2500 ppm, avantageusement inférieur à 2000 ppm, plus avantageusement inférieur à 1500 ppm mesuré sur une période de 8h. Cela permet de diminuer la consommation totale de CO₂ gazeux au niveau de l'installation, en évitant les pertes au cours du procédé qui fonctionne de manière continue. Cela permet également de préserver la santé des opérateurs et de limiter l'exposition de l'opérateur au dégagement de CO₂ gazeux.

Le dégagement de CO₂ gazeux peut être mesuré manuellement, à l'aide de dispositifs portatifs ou de détecteurs de CO₂ gazeux classiques et connus de la personne du métier.

De préférence, le sulfate de calcium hémihydraté provient du gypse naturel, du gypse obtenu par désulfuration des gaz de combustion (lire, gypse FGD « Flue Gas Desulfurization », en anglais), du gypse recyclé et de leurs mélanges.

Le gypse obtenu par désulfuration des gaz de combustion correspond au gypse qui est formé par la réaction des oxydes de soufre comme le SO₂ libérés lors de la combustion du charbon ou du pétrole avec du calcaire, autrement dit du carbonate de calcium ou CaCO₃.

Le gypse recyclé quant à lui est obtenu par le recyclage de déchets de gypse (sulfate de calcium dihydraté) provenant des déchets de construction, démolition ou de production. Ces déchets sont ainsi triés, broyés et purifiés pour être réutilisés comme matière première.

Avantageusement, le procédé selon l'invention comprend une application de la composition de plâtre entre deux substrats déroulant en continu l'un en face de l'autre sur une bande déroulante dans une unité de fabrication de plaques de plâtre qui est placée après ladite unité de mélange.

Encore plus avantageusement, une couche d'une composition liquide de plâtre obtenue selon l'invention est coulée sur un substrat cellulosique déroulant et recouverte par un autre substrat cellulosique de manière à former une plaque de plâtre enveloppée par un substrat cellulosique prête pour le séchage et la découpe.

Le séchage permet de fournir des plaques de plâtres découpées à la taille souhaitée.

Selon un mode de réalisation préféré, le substrat cellulosique est du carton recyclé pour la fabrication de plaques standard pour une utilisation classique avec ou sans aucun renfort particulier.

De préférence, le substrat cellulosique est du carton ayant subi un traitement hydrofuge pour la fabrication de plaques résistantes à l'humidité et qui limitent l'absorption d'eau.

D'autres formes de réalisation du procédé selon l'invention sont indiquées dans les revendications annexées.

L'invention concerne aussi une installation pour fabriquer une composition de plâtre en continu selon le procédé de l'une quelconque des revendications précédentes, comprenant :
- Un conduit (2) d'approvisionnement d'eau, ledit conduit s'étendant au moins d'un point d'injection de CO₂ gazeux (3) jusqu'à l'entrée d'une unité de mélange (4),
- Un moyen d'approvisionnement d'une composition solide (5) comprenant du sulfate de calcium hémihydraté
- Le point d'injection de CO₂ gazeux (3) étant un moyen relié audit conduit qui est agencé pour disperser et dissoudre le CO₂ gazeux dans l'eau,
- L'unité de mélange (4) étant agencée pour recevoir ladite composition solide comprenant du sulfate de calcium hémihydraté et l'eau contenant le CO₂ gazeux dispersé et dissout provenant dudit conduit (2) pour les mélanger et ainsi former une composition liquide de plâtre (7)
caractérisé en ce que, ledit conduit (2) est agencé pour être alimenté en eau contenant le CO₂ gazeux à un débit d'au moins 200 L/min, de préférence comprise entre 250 et 400 L/min, plus préférentiellement comprise entre 275 et 350 L/min, plus préférentiellement encore entre 275 et 320 L/min, et agencé pour permettre un mélange passif du CO₂ gazeux jusqu'à sa dissolution dans l'eau.

L'installation selon l'invention peut également permettre la fabrication de plaques de plâtre. En effet, après injection de CO₂ dans l'eau qui s'écoule dans ledit conduit, l'eau contenant le CO₂, dans laquelle le CO₂ est au moins partiellement dispersé et dissous au moyen d'un mélange passif, est acheminée vers l'unité de mélange où elle est mélangée avec une composition solide comprenant du sulfate de calcium hémihydraté afin de former une composition liquide de plâtre. Ladite composition liquide de plâtre est ensuite appliquée en continu entre deux substrats, de préférence cellulosiques, déroulant l'un en face de l'autre sur une bande transporteuse, de manière à former une plaque de plâtre qui est ensuite durcie, séchée puis découpée.

De préférence, l'installation selon l'invention dans laquelle ledit conduit comprend un mélangeur statique choisi dans le groupe comprenant au moins une ailette, une contre-pale, une structure hélicoïdale.

De préférence, l'installation selon l'invention comprend une pompe connue de la personne du métier située en amont dudit conduit d'approvisionnement d'eau.

De manière préférée, la pompe permet d'alimenter ledit conduit en eau contenant le CO₂ gazeux à un débit d'au moins 200 L/min, de préférence comprise entre 250 et 400 L/min, plus préférentiellement comprise entre 275 et 350 L/min, plus préférentiellement encore entre 275 et 320 L/min.

De manière encore plus préférée, l'installation selon l'invention comprend un conduit comportant une première section présentant un premier diamètre intérieur, suivie d'une deuxième section présentant un diamètre intérieur inférieur à celui de ladite première section.

Avantageusement, ladite première section avec un premier diamètre intérieur inférieur au diamètre intérieur de ladite deuxième section permet d'alimenter l'eau contenant le CO₂ gazeux à un débit d'au moins 200 L/min, de préférence comprise entre 250 et 400 L/min, plus préférentiellement comprise entre 275 et 350 L/min, plus préférentiellement encore entre 275 et 320 L/min.

Plus préférentiellement, l'installation selon l'invention dans laquelle ledit conduit est agencé pour produire un effet Venturi afin de permettre la dissolution et dispersion du CO₂ gazeux dans l'eau contenue au sein dudit conduit.

Avantageusement, l'installation selon l'invention dans laquelle ledit conduit s'étend sur une distance inférieure à 20 mètres, de préférence inférieure à 15 mètres, plus préférentiellement inférieure à 10 mètres. Cela permet d'avoir une installation compacte ne nécessitant pas d'espaces étendus.

De manière préférée, l'installation selon l'invention comprend en outre un point d'injection d'additifs organiques et/ou inorganiques sous forme liquide dans l'eau contenue au sein dudit conduit.

De manière plus préférentielle, l'installation selon l'invention comprend en outre un point d'injection d'additifs organiques et/ou inorganiques sous forme de poudre au sein de ladite unité de mélange.

D'autres formes de réalisation de l'installation selon l'invention sont indiquées dans les revendications annexées. L'invention a également trait à une utilisation d'un mélangeur statique et/ou d'un effet Venturi dans un conduit alimenté en eau et en CO₂ gazeux pour disperser et dissoudre du CO₂ gazeux dans l'eau pour former des plaques de plâtre.

D'autres formes de réalisation de l'utilisation selon l'invention sont indiquées dans les revendications annexées.

D'autres caractéristiques et avantages de la présente invention seront tirés de la description non limitative qui suit, et en faisant référence aux dessins et aux exemples.

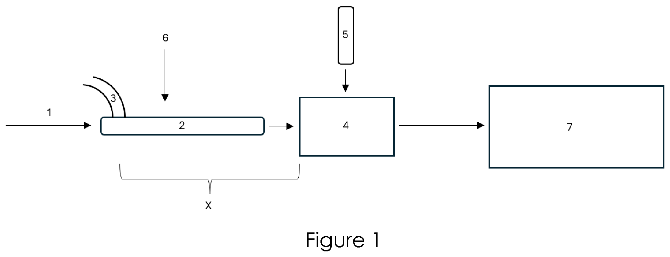

La figure 1 illustre un exemple de réalisation d'une installation selon l'invention.

Les expressions « mélangeur passif », « mélange passif » signifient qu'un dispositif de mélange sans pièces mobiles est utilisé. Ainsi, Cette expression générique permet d'inclure aussi bien les mélangeurs statiques que les dispositifs reposant sur l'effet Venturi. Autrement dit, et de manière préférée, le mélange passif est obtenu sans l'emploi d'éléments mobiles.

Un mélangeur statique est un dispositif qui permet de mélanger des fluides sans recourir à des pièces mobiles. Son principe repose sur l'utilisation d'éléments internes (par exemple, des ailettes ou des structures hélicoïdales) qui, lorsqu'ils sont traversés par le flux ou l'eau, créent des turbulences et redistribuent les composants de manière homogène. Ce type de mélangeur est souvent appelé aussi mélangeur passif et présente l'avantage de réduire l'entretien et les problèmes mécaniques liés aux pièces en mouvement.

Le terme Venturi désigne principalement un dispositif ou une configuration de tuyauterie qui exploite l'effet Venturi. Cet effet se produit lorsqu'un fluide s'écoule à travers une zone de constriction (une réduction de section) dans un conduit. La diminution de la section entraîne une accélération du fluide et, par conséquent, une baisse de pression locale.

Dans le cadre de la présente invention, les termes « composition de plâtre » désigne le mélange obtenu après addition d'eau à du « stucco » pour obtenir une pâte. Ainsi, la composition de plâtre selon l'invention se présente sous forme d'une pâte (« slurry », en anglais).

Le terme « stucco » est connu de la personne du métier actif dans le domaine de la construction qui fait appel à du plâtre. Le terme « stucco » doit être compris comme correspondant à du sulfate de calcium hémihydraté, noté β-CaSO₄ ·½H₂O.

Le terme « unité de mélange » peut correspondre à un mélangeur à agitation mécanique en continu. Un mélangeur à agitation mécanique est un dispositif utilisé pour homogénéiser des mélanges liquides-solides à l'aide d'un élément mécanique mobile tel qu'une hélice ou une turbine actionnée par un moteur au sein d'une cuve cylindrique. La composition liquide de plâtre y est ainsi formée et évacuée par au moins deux voies de décharge sur un convoyeur, de préférence au moins 3 voies de décharge.

Le procédé suivant l'invention prévoit la dispersion d'un gaz tel que le CO₂ gazeux dans l'eau qui consiste à l'incorporer. Ce processus permet de finement répartir le gaz, le CO₂ gazeux, dans l'eau sans pour autant l'y dissoudre complètement.

L'eau est de préférence approvisionnée à un certain débit, avant contact avec le CO₂ gazeux. Avantageusement, l'eau contenant le CO₂ gazeux est alimentée dans ledit conduit à un débit d'au moins 200 L/min, de préférence comprise entre 250 et 400 L/min, plus préférentiellement comprise entre 275 et 350 L/min, plus préférentiellement encore entre 275 et 320 L/min.

Ainsi, la dissolution indiquée dans le cadre de la présente invention consiste à intégrer davantage le CO₂ gazeux dans le liquide pour former une solution homogène dans laquelle le gaz n'est plus visible à l'œil nu. L'eau qui comprend ce CO₂ gazeux dispersé et dissous est ainsi prête à atterrir dans l'unité de mélange.

Selon l'invention, la dissolution du CO₂ gazeux dans l'eau est réalisée par un mélange passif dans ledit conduit, par effet Venturi au sein dudit conduit et/ou au moyen d'un mélangeur statique choisi dans le groupe comprenant au moins une ailette, une contre-pale, une structure hélicoïdale.

Après dispersion et dissolution du CO₂ gazeux dans l'eau, cette dernière s'écoule dans ledit conduit vers l'unité de mélange à un débit d'une valeur inférieure à celle dudit débit initial selon un mode préféré.

De manière préférée, un agent moussant qui est un additif à base de tensioactifs peut être utilisé pour générer et incorporer des bulles d'air dans une composition liquide de plâtre. Ceci a pour effet de réduire la densité du produit final.

Dans le cadre de la présente invention, l'unité de fabrication permet la fabrication en continu de plaques sur un convoyeur plat à bande continue. Un support cellulosique est avantageusement déroulé sur le convoyeur sur lequel la composition liquide de plâtre est coulée et recouverte par une deuxième feuille de substrat cellulosique pour former un « sandwich » (couche solide - liquide - solide). La plaque ainsi formée se durcit pendant son déplacement et est prête pour être séchée et découpée.

La composition de plâtre, en sortie de ladite unité de mélange peut présenter un dégagement de CO₂ gazeux inférieur à 5000 ppm, de préférence inférieur à 4000 ppm mesuré sur une période de 8 heures. L'invention permet ainsi de fabriquer par exemple des plaques de plâtre à partir de gypse naturel, du gypse obtenu par désulfurisation, du gypse recyclé et de leurs mélanges qui peut être broyé et ensuite chauffé dans un four. Cette étape de calcination partielle permet de transformer le dihydraté en hémihydrate en éliminant une partie de l'eau de cristallisation.

Selon un exemple de réalisation, de l'eau circule dans un conduit dans lequel du CO₂ gazeux est injecté pour y être dispersé et dissous. L'eau contenant le CO₂ gazeux coule à un débit prédéterminé depuis le conduit vers une unité de mélange. L'hémihydrate, plus réactif, est alors mélangé avec de l'eau dans laquelle du CO₂ gazeux est dispersé avec éventuellement divers additifs - tels que des retardateurs de prise, des liants et parfois des fibres - pour former une pâte homogène dans l'unité de mélange. Dès que l'eau est ajoutée, une réaction d'hydratation exothermique se déclenche, reconstituant progressivement le dihydraté et solidifiant la pâte.

La pâte obtenue est ensuite coulée en continu entre deux feuilles de papier ou de carton spécialement conçues pour constituer les faces de la plaque. Grâce à la réaction d'hydratation, la plaque se solidifie en quelques minutes. Pour parfaire le produit, les plaques sont ensuite transférées dans des chambres de séchage où l'excès d'humidité est éliminé, garantissant ainsi leur stabilité et leurs performances mécaniques. Enfin, les plaques séchées sont découpées aux dimensions standard, inspectées et emballées, prêtes à être utilisées dans la construction.

Ce procédé permet de produire un matériau de construction léger, isolant, hydrofuge.

La figure 1 illustre un mode de réalisation additionnel de l'invention.

Le schéma présente plusieurs étapes dans la fabrication continue d'une composition de plâtre (slurry, en anglais) à destination de la production de plaques de plâtre.

Un approvisionnement d'eau 1 est réalisé dans un conduit 2. Un point d'injection 3 est relié au conduit 2 et permet l'injection du CO₂ gazeux dans l'eau circulant dans le conduit. Ce point d'injection est une pièce additionnelle qui est connectée de manière étanche audit conduit 2 qui joue le rôle de conduit principal. Un point d'injection 6 est relié au conduit 2 et permet également l'ajout d'additifs organiques et/ou inorganiques sous forme liquide. Le conduit 2 s'étend sur une distance X au départ du point d'injection 3 jusqu'à l'entrée d'une unité de mélange 4 dans lequel l'eau circulant dans le conduit 2 se déverse. Un point d'addition 5 de sulfate de calcium hémihydraté et d'additifs organiques et/ou inorganiques sous forme de poudre est relié à l'unité de mélange 4. L'unité de mélange 4 est relié à une unité de fabrication 7 de plaques de plâtre tel que décrit ci-avant.

Eau provient avantageusement d'une source naturelle, de la pluie, de processus de recyclage de l'eau provenant d'une usine voisine, du réseau de la ville et de leurs mélanges.

En fonctionnement, du CO₂ gazeux est injecté avec un 'sparger' dans le conduit 2 afin de le disperser et permettre une dissolution au moins partielle dans l'eau. On peut également y ajouter des additifs organiques et/ou inorganiques sous forme de liquide via le point d'injection 6. Cette étape a pour objectif de préparer de l'eau enrichie en CO₂.

Au niveau de l'unité de mélange 4 on ajoute la poudre de sulfate de calcium hémihydraté (stucco) à l'eau contenant le CO₂ gazeux dispersé et dissous. On peut également y ajouter des additifs organiques et/ou inorganiques sous forme de poudre. Le mélangeur 4 malaxe l'eau contenant le CO₂, les éventuels additifs et le stucco pour former la composition liquide de plâtre (slurry).

La pâte (slurry) sort ensuite du mélangeur 4 pour être transformée en plaques de plâtre dans l'unité de fabrication 7 dédiée. On dépose la pâte sur un support cellulosique, on la recouvre éventuellement d'un second support cellulosique, puis on la façonne et on la fait sécher. Après séchage, les plaques sont découpées.

Le procédé selon l'invention est conçu pour fonctionner en continu : l'eau (avec CO₂) s'écoule en continu, le stucco est ajouté de façon continue, et la composition de plâtre est également évacuée en continu vers la zone de fabrication de plaques 7 à l'aide d'au moins 2 buses d'écoulement, de préférence au moins 3 buses d'écoulement.

### Exemple 1

L'eau (1) est approvisionnée dans le conduit (2) à un débit de 323 L/min. Une injection de CO₂ gazeux à raison de 30 kg/h a lieu au point d'injection (3) au sein dudit conduit. Le CO₂ gazeux est dispersé et dissous dans l'eau s'écoulant sur une distance de 10 mètres jusqu'à l'entrée de l'unité de mélange (4). L'eau contenant le CO₂ gazeux s'écoule à un débit de 314 L/min dudit conduit (2) à ladite unité de mélange (4). Cette dernière est mélangée avec une composition solide comprenant du sulfate de calcium hémihydraté dans ladite unité de mélange et mène à la formation d'une composition liquide de plâtre (7). Cette composition liquide est ensuite coulée entre 2 substrats cellulosique déroulants de manière à former une plaque de plâtre enveloppée par un substrat cellulosique prête pour le séchage et la découpe.

Les articles « un » et « une » sont utilisés ici pour faire référence à un ou plus d'un (à savoir, à au moins un) des objets grammaticaux de l'article et peuvent être remplacés par un article qui désigne un pluriel comme par exemple au « moins 2 », « au moins 3 », « plusieurs » etc.

Les expressions « dans un mode de réalisation », « selon un mode de réalisation » et autres signifient généralement que la particularité, structure ou caractéristique particulière suivant l'expression est incluse dans au moins un mode de réalisation de la présente divulgation, et peut être incluse dans plus d'un mode de réalisation de la présente divulgation. Il est important de noter que de telles expressions ne font pas nécessairement référence au même mode de réalisation.

Si le texte indique qu'un composant ou une particularité « peut », ou « pourrait » être incluse ou avoir une caractéristique, il n'est pas nécessaire que ce composant ou cette particularité particulier (particulière) soit inclus(e) ou ait la caractéristique.

S'il apparait ici, le terme « comprenant » ou « contenant » et les dérivés de ceux-ci ne sont pas destinés à exclure la présence d'un quelconque composant, étape ou procédure additionnel, que celui-ci soit divulgué ou non ici. Afin d'éviter tout doute, le terme « comprenant » peut inclure tout élément / additif, adjuvant ou composé additionnel, sauf indication contraire. Par contraste, le terme « essentiellement constitué de », s'il apparait ici, exclut de la portée de toute citation suivante tout autre composant, étape ou procédure, à l'exception de ceux qui ne sont pas essentiels à l'opérabilité et le terme « constitué de », s'il est utilisé, exclut tout composant, étape ou procédure non spécifiquement défini ou indiqué. Les termes « ou » et « et/ou », sauf indication contraire, font référence aux membres indiqués individuellement ainsi que dans toute combinaison. Par exemple, l'expression A et/ou B fait référence à A seul, à B seul, ou à A et B. De plus, le terme et tout équivalent à « comprenant » peut être remplacé par « constitué de ».

Aussi, les termes « obtenable » ou « pouvant être obtenu » ou tout expression similaire ou dérivées peuvent être remplacés par « directement obtenu ».

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé de fabrication d'une composition de plâtre en continu pour fabriquer des plaques de plâtres comprenant :
- Un approvisionnement d'eau (1) dans un conduit (2),
- Une injection de CO₂ gazeux (3) dans ledit conduit (2) approvisionné en eau, ledit conduit s'étendant au moins d'un point d'injection de CO₂ gazeux (3) jusqu'à l'entrée d'une unité de mélange (4),
- Dispersion et dissolution du CO₂ gazeux dans l'eau s'écoulant dans ledit conduit (2),
- Après dispersion et dissolution du CO₂ gazeux dans l'eau, addition de l'eau contenant le CO₂ gazeux dans ladite unité de mélange (4),
- Addition d'une composition solide (5) comprenant du sulfate de calcium hémihydraté dans ladite unité de mélange (4),
- Mélange de l'eau contenant le CO₂ gazeux avec ladite composition solide (5) dans ladite unité de mélange (4) et formation d'une composition liquide de plâtre (7),
**caractérisé en ce que**, l'eau contenant le CO₂ gazeux est alimentée dans ledit conduit (2) à un débit d'au moins 200 L/min, de préférence comprise entre 250 et 400 L/min, plus préférentiellement comprise entre 275 et 350 L/min, plus préférentiellement encore entre 275 et 320 L/min, et **en ce que** la dissolution du CO₂ gazeux dans l'eau est réalisée par un mélange passif dans ledit conduit (2).

2. Procédé selon la revendication 1, dans lequel ledit conduit (2) qui s'étend du point d'injection du CO₂ gazeux (3) jusqu'à l'entrée de ladite unité de mélange (4) correspond à une distance inférieure à 40 m, de préférence inférieure à 35 m, plus préférentiellement inférieure à 30 m, encore plus préférentiellement inférieure à 25 m, avantageusement inférieure à 20 m, plus avantageusement inférieure à 15 m, encore plus avantageusement inférieure à 10 m.

3. Procédé selon la revendication 1 ou 2, dans lequel le mélange passif est réalisé par effet Venturi au sein dudit conduit (2) et/ou au moyen d'un mélangeur statique choisi dans le groupe comprenant au moins une ailette, une contre-pale, une structure hélicoïdale.

4. Procédé selon l'une quelconque des revendications précédentes, comprenant un ajout d'additifs organiques et/ou inorganiques sous forme de poudre (5) sélectionnés parmi le groupe comprenant les fibres de verre, la perlite, la vermiculite, les cires, la paraffine, la cellulose, le verre et leurs mélanges dans ladite unité de mélange (4) simultanément ou après addition de ladite composition solide.

5. Procédé selon l'une quelconque des revendications précédentes, dans lequel ledit conduit (2) présente une section avec un diamètre inférieur à celui de ladite unité de mélange (4).

6. Procédé selon l'une quelconque des revendications précédentes, dans lequel ledit conduit (2) est choisi dans le groupe comprenant un tube, un tuyau, une canalisation.

7. Procédé selon l'une quelconque des revendications précédentes, dans lequel la composition de plâtre, en sortie de ladite unité de mélange (4), présente un dégagement de CO₂ gazeux inférieur à 5000 ppm, de préférence inférieur à 4000 ppm, plus préférentiellement inférieur à 3000 ppm, encore plus préférentiellement inférieur à 2500 ppm, avantageusement inférieur à 2000 ppm, plus avantageusement inférieur à 1500 ppm mesuré sur une période de 8 heures.

8. Procédé selon l'une quelconque des revendications précédentes, dans lequel le sulfate de calcium hémihydraté est choisi dans le groupe comprenant du gypse naturel, du gypse obtenu par désulfuration des gaz de combustion (lire, gypse FGD « Flue Gas Desulfurization », en anglais), du gypse recyclé et de leurs mélanges.

9. Procédé selon l'une quelconque des revendications précédentes, comprenant une application de la composition de plâtre entre deux substrats déroulant en continu l'un en face de l'autre sur une bande déroulante dans une unité de fabrication de plaques de plâtre qui est placée après ladite unité de mélange (4).

10. Installation pour fabriquer une composition de plâtre en continu selon le procédé de l'une quelconque des revendications précédentes, comprenant :
- Un conduit (2) d'approvisionnement d'eau, ledit conduit s'étendant au moins d'un point d'injection de CO₂ gazeux (3) jusqu'à l'entrée d'une unité de mélange (4),
- Un moyen d'approvisionnement d'une composition solide (5) comprenant du sulfate de calcium hémihydraté,
- Le point d'injection de CO₂ gazeux (3) étant un moyen relié audit conduit qui est agencé pour disperser et dissoudre le CO₂ gazeux dans l'eau,
- L'unité de mélange (4) étant agencée pour recevoir ladite composition solide comprenant du sulfate de calcium hémihydraté et l'eau contenant le CO₂ gazeux dispersé et dissout provenant dudit conduit (2) pour les mélanger et ainsi former une composition liquide de plâtre (7),
**caractérisé en ce que**, ledit conduit (2) est agencé pour être alimenté en eau contenant le CO₂ gazeux à un débit d'au moins 200 L/min, de préférence comprise entre 250 et 400 L/min, plus préférentiellement comprise entre 275 et 350 L/min, plus préférentiellement encore entre 275 et 320 L/min, et agencé pour permettre un mélange passif du CO₂ gazeux jusqu'à sa dissolution dans l'eau.

11. Installation selon la revendication 10, dans laquelle ledit conduit (2) comprend un mélangeur statique choisi dans le groupe comprenant au moins une ailette, une contre-pale, une structure hélicoïdale.

12. Installation selon la revendication 10 ou 11, dans laquelle ledit conduit (2) est agencé pour produire un effet Venturi afin de permettre la dissolution et dispersion du CO₂ gazeux dans l'eau contenue au sein dudit conduit (2).

13. Installation selon les revendications 10 à 12, dans laquelle ledit conduit (2) s'étend sur une distance inférieure à 20 mètres, de préférence inférieure à 15 mètres, plus préférentiellement inférieure à 10 mètres.

14. Installation selon les revendications 10 à 13, dans laquelle ledit conduit (2) comprend en outre un point d'injection d'additifs organiques et/ou inorganiques sous forme liquide (6) dans l'eau contenue au sein dudit conduit (2).

15. Installation selon les revendications 10 à 14, dans laquelle ladite unité de mélange (4) comprend en outre un point d'ajout d'additifs organiques et/ou inorganiques (5) sous forme de poudre (5) au sein de ladite unité de mélange (4).

## Revendications modifiées

### Revendications modifiées conformément à la règle 137(2) CBE.

1. Procédé de fabrication d'une composition de plâtre en continu pour fabriquer des plaques de plâtres comprenant :
- Un approvisionnement d'eau (1) dans un conduit (2),
- Une injection de CO₂ gazeux (3) dans ledit conduit (2) approvisionné en eau, ledit conduit s'étendant au moins d'un point d'injection de CO₂ gazeux (3) jusqu'à l'entrée d'une unité de mélange (4),
- Dispersion et dissolution du CO₂ gazeux dans l'eau s'écoulant dans ledit conduit (2),
- Après dispersion et dissolution du CO₂ gazeux dans l'eau, addition de l'eau contenant le CO₂ gazeux dans ladite unité de mélange (4),
- Addition d'une composition solide (5) comprenant du sulfate de calcium hémihydraté dans ladite unité de mélange (4),
- Mélange de l'eau contenant le CO₂ gazeux avec ladite composition solide (5) dans ladite unité de mélange (4) et formation d'une composition liquide de plâtre (7),
**caractérisé en ce que**, l'eau contenant le CO₂ gazeux est alimentée dans ledit conduit (2) à un débit d'au moins 200 L/min, de préférence comprise entre 250 et 400 L/min, plus préférentiellement comprise entre 275 et 350 L/min, plus préférentiellement encore entre 275 et 320 L/min, et **en ce que** la dissolution du CO₂ gazeux dans l'eau est réalisée par un mélange passif dans ledit conduit (2), ledit mélange passif étant réalisé par effet Venturi au sein dudit conduit (2) et/ou au moyen d'un mélangeur statique choisi dans le groupe comprenant au moins une ailette, une contre-pale, une structure hélicoïdale.

2. Procédé selon la revendication 1, dans lequel ledit conduit (2) qui s'étend du point d'injection du CO₂ gazeux (3) jusqu'à l'entrée de ladite unité de mélange (4) correspond à une distance inférieure à 40 m, de préférence inférieure à 35 m, plus préférentiellement inférieure à 30 m, encore plus préférentiellement inférieure à 25 m, avantageusement inférieure à 20 m, plus avantageusement inférieure à 15 m, encore plus avantageusement inférieure à 10 m.

3. Procédé selon l'une quelconque des revendications précédentes, comprenant un ajout d'additifs organiques et/ou inorganiques sous forme de poudre (5) sélectionnés parmi le groupe comprenant les fibres de verre, la perlite, la vermiculite, les cires, la paraffine, la cellulose, le verre et leurs mélanges dans ladite unité de mélange (4) simultanément ou après addition de ladite composition solide.

4. Procédé selon l'une quelconque des revendications précédentes, dans lequel ledit conduit (2) présente une section avec un diamètre inférieur à celui de ladite unité de mélange (4).

5. Procédé selon l'une quelconque des revendications précédentes, dans lequel ledit conduit (2) est choisi dans le groupe comprenant un tube, un tuyau, une canalisation.

6. Procédé selon l'une quelconque des revendications précédentes, dans lequel la composition de plâtre, en sortie de ladite unité de mélange (4), présente un dégagement de CO₂ gazeux inférieur à 5000 ppm, de préférence inférieur à 4000 ppm, plus préférentiellement inférieur à 3000 ppm, encore plus préférentiellement inférieur à 2500 ppm, avantageusement inférieur à 2000 ppm, plus avantageusement inférieur à 1500 ppm mesuré sur une période de 8 heures.

7. Procédé selon l'une quelconque des revendications précédentes, dans lequel le sulfate de calcium hémihydraté est choisi dans le groupe comprenant du gypse naturel, du gypse obtenu par désulfuration des gaz de combustion (lire, gypse FGD « Flue Gas Desulfurization », en anglais), du gypse recyclé et de leurs mélanges.

8. Procédé selon l'une quelconque des revendications précédentes, comprenant une application de la composition de plâtre entre deux substrats déroulant en continu l'un en face de l'autre sur une bande déroulante dans une unité de fabrication de plaques de plâtre qui est placée après ladite unité de mélange (4).

9. Installation pour fabriquer une composition de plâtre en continu selon le procédé de l'une quelconque des revendications précédentes, comprenant :
- Un conduit (2) d'approvisionnement d'eau, ledit conduit s'étendant au moins d'un point d'injection de CO₂ gazeux (3) jusqu'à l'entrée d'une unité de mélange (4),
- Un moyen d'approvisionnement d'une composition solide (5) comprenant du sulfate de calcium hémihydraté,
- Le point d'injection de CO₂ gazeux (3) étant un moyen relié audit conduit qui est agencé pour disperser et dissoudre le CO₂ gazeux dans l'eau,
- L'unité de mélange (4) étant agencée pour recevoir ladite composition solide comprenant du sulfate de calcium hémihydraté et l'eau contenant le CO₂ gazeux dispersé et dissout provenant dudit conduit (2) pour les mélanger et ainsi former une composition liquide de plâtre (7),
**caractérisé en ce que**, ledit conduit (2) est agencé pour être alimenté en eau contenant le CO₂ gazeux à un débit d'au moins 200 L/min, de préférence comprise entre 250 et 400 L/min, plus préférentiellement comprise entre 275 et 350 L/min, plus préférentiellement encore entre 275 et 320 L/min, et agencé pour permettre un mélange passif du CO₂ gazeux jusqu'à sa dissolution dans l'eau, et dans lequel ledit conduit (2) comprend un mélangeur statique choisi dans le groupe comprenant au moins une ailette, une contre-pale, une structure hélicoïdale et est agencé pour produire un effet Venturi afin de permettre la dissolution et dispersion du CO₂ gazeux dans l'eau contenue au sein dudit conduit (2).

10. Installation selon la revendication 9, dans laquelle ledit conduit (2) s'étend sur une distance inférieure à 20 mètres, de préférence inférieure à 15 mètres, plus préférentiellement inférieure à 10 mètres.

11. Installation selon l'une quelconque des revendications 9 à 10, dans laquelle ledit conduit (2) comprend en outre un point d'injection d'additifs organiques et/ou inorganiques sous forme liquide (6) dans l'eau contenue au sein dudit conduit (2).

12. Installation selon l'une quelconque des revendications 9 à 11, dans laquelle ladite unité de mélange (4) comprend en outre un point d'ajout d'additifs organiques et/ou inorganiques (5) sous forme de poudre (5) au sein de ladite unité de mélange (4).
